# EUROPÄISCHE PATENTSCHRIFT

(11) **EP 0 533 303 B1**
(45) Veröffentlichungstag und Bekanntmachung des Hinweises auf die Patenterteilung: **20.11.1996**
(21) Anmeldenummer: 92250259.6
(22) Anmeldetag: 15.09.1992
(51) Int. Cl.: G01K 1/12, G01J 5/04

(54) **Gehäuse einer Feuerraumsonde**
Housing for a furnace probe
Logement pour sonde d'un foyer

(30) Priorität: 19.09.1991 DE 9111701 U
(43) Veröffentlichungstag der Anmeldung: 24.03.1993
(73) Patentinhaber: Marai Mechanik und Elektronik GmbH, D-30970 Wennigsen (DE)
(72) Erfinder: Kühn, Rainer, W-3015 Wennigsen 4 (DE)
(74) Vertreter: Brümmerstedt, Hans Dietrich, Dipl.-Ing.

(56) Entgegenhaltungen:
- US-A- 2 534 448
- PATENT ABSTRACTS OF JAPAN vol. 6, no. 171 (P-140) 4. September 1982 & JP-A-57 090 143
- PATENT ABSTRACTS OF JAPAN vol. 14, no. 204 (P-1042) 25. April 1990 & JP-A-20 44 220

## Beschreibung

Die Erfindung betrifft das Gehäuse einer Feuerraumsonde, das einen Doppelmantel aufweist, dessen Hohlraum über einen im Bereich der Sondenrückseite angeordneten Einlaß mit einer Kühlflüssigkeit beschickt wird, die in einem Vorlauf-Strömungspfad zur Sondenfrontseite strömt, dort im Bereich einer Ausblicksöffnung umgelenkt, und in einem Rücklauf-Strömungspfad zu einem im Bereich der Sondenrückseite angeordneten Auslaß zurückgeführt wird.

Zur Beobachtung in Hochtemperatur-Zonen von Dampferzeugern, Müllverbrennungsanlagen, Glühöfen, Schmelzöfen und ähnlichen Einrichtungen und Anlagen, werden Videokameras eingesetzt. Zum Schutz gegen die hohen Temperaturen und auch gegen mechanische Einflüsse, wie z. B. Staub und Schlackespritzer, sind die empfindlichen Kameras von einem flüssigkeits-, meist wassergekühlten Gehäuse umgeben. Der gefährdetste Bereich einer Feuerraumsonde ist deren Frontseite, da sie der Beobachtungszone unmittelbar zugewandt und somit der Strahlungswärme und anderen Einflüssen direkt ausgesetzt ist. Es kommt daher auf eine effektive Kühlung dieses Bereiches an.

Es sind Feuerraumsonden bekannt, deren Gehäuse einen Drei-Rohr-Kühlmantel besitzen. Bei diesem Gehäuse wird das Kühlwasser im Bereich der Sondenrückseite über einen Einlaß zugeführt, strömt dann im Hohlraum des ersten Doppelmantels zur Sondenfrontseite, wird dort im Bereich einer Ausblicksöffnung für das Objektiv der Kamera umgelenkt und fließt im Hohlraum des zweiten Doppelmantels zurück zum Auslaß.

Andere bekannte Feuerraumsonden haben einen einfachen Doppelmantel, in dessen Hohlraum einzelne Rohre angeordnet sind, in denen das Kühlwasser nach vorn zur Sondenfrontseite strömt. Dort wird es ebenfalls umgelenkt und in dem verbleibenden freien Querschnitt des Hohlraums zum Auslaß zurückgeführt. Alternativ zu den Einzelrohren wird auch mit Längsstegen gearbeitet, die den Hohlraum des Doppelmantels in Segmente unterteilen, wobei dann, analog zu der eben genannten Ausführung, das Kühlwasser in den Längssegmenten zur Sondenfrontseite und von dort wieder zurückgeführt wird. Ein derartiges Gehäuse ist aus US-A-2 534 448 bekannt.

Der Nachteil des beschriebenen Standes der Technik ist darin zu sehen, daß das Kühlwasser auf seinem Weg durch das Sondengehäuse durch in der Größe schwankende Strömungsquerschnitte fließt. Dies führt zu einem örtlichen Aufkochen des Wassers, d. h. zur Dampfblasenbildung und damit zu einer örtlichen Überhitzung des Sondengehäuses. Die Folge ist eine schädliche Wärmebelastung der empfindlichen Kamera und des Objektives. Im Extremfall kann es zum Abbrand oder zur Schweißnahtzerstörung am Sondengehäuse kommen. Örtliche überhitzungen führen auch zu einer Ausfällung des im Kühlwasser enthaltenen Kalks. Die dadurch entstehenden Ablagerungen hemmen den Wasserdurchlauf und verschlechtern somit die Kühlwirkung.

Nun kann man die Folgen der Dampfblasenbildung zwar durch eine entsprechende schräge Einbaulage der Feuerraumsonde mindern, in der sich die Dampfblasen an einer bestimmten, entlüftbaren Stelle des Gehäuses sammeln, nur werden damit zum einen die Ursachen für die Dampfblasenbildung nicht beseitigt und zum anderen werden die Freiheitsgrade für den Einbau der Sonde beschränkt.

Aufgabe der Erfindung ist es, ein Feuerraumsonden-Gehäuse zur Verfügung zu stellen, in dem durch definierte Strömungsbedingungen für die Kühlflüssigkeit örtliche Überhitzungen mit den bekannten nachteiligen Folgen vermieden werden.

Erfindungsgemäß wird diese Aufgabe durch ein Gehäuse gelöst, das, prinzipiell gesehen, wie die bisher bekannten Gehäuse einen Vorlauf-Strömungspfad und einen Rücklauf-Strömungspfad besitzt, bei dem aber der Vorlauf-Strömungspfad an der Sondenfrontseite in eine Hälfte eines sich über den Umfang der Sonde erstreckenden Außenringkanals übergeht, von dem eine Anzahl, in der Sondenfrontseite verlaufende Radialnuten in eine Hälfte eines Innenringkanals führt, der die Ausblicksöffnung konzentrisch umgibt, und von dessen zweiten Hälfte, die mit der ersten Hälfte flüssigkeitsseitig eine Einheit bildet, eine Anzahl Radialnuten nach außen in die zweite, von der ersten Hälfte flüssigkeitsdicht getrennten Hälfte des Außenringkanals führt, von der der Rücklauf-Strömungspfad abgeht, wobei auf dem gesamten Strömungsweg der Kühlflüssigkeit, beginnend mit dem Einlaß und endend mit dem Auslaß ein gleichbleibender Strömungsquerschnitt vorliegt.

Bei dem erfindungsgemäßen Gehäuse weisen der Kühlmitteleinlaß, der Vorlauf-Strömungspfad, die Summe der in den Innenringkanal führenden Radialnuten, die Summe der aus dem Innenringkanal herausführenden Radialnuten, jede der beiden kühlflüssigkeitsführenden Hälften des Innenringkanals, der Rücklauf-Strömungspfad sowie der Kühlmittelauslaß gleiche Strömungsquerschnitte auf. Damit liegen auf dem gesamten Durchgang der Kühlflüssigkeit durch das Gehäuse gleiche Strömungsbedingungen vor, wobei die durch die Wärmeausdehnung der Kühlflüssigkeit bedingte, geringfügig größere Rücklaufgeschwindigkeit vernachlässigt werden kann. Gleiche Strömungsbedingungen sind aber die Voraussetzung für einen definierten, berechenbaren Wärmeaustausch. Dadurch ist es möglich, örtliche überhitzungen objektiv auszuschließen.

Von besonderer Bedeutung ist auch die erfindungsgemäße Gestaltung der Sondenfrontseite. Hier wird die Kühlflüssigkeit unter Beibehaltung des Strömungsquerschnitts auf eine Vielzahl von Strömungskanäle, die Radialnuten, aufgeteilt. Dadurch ergibt sich in diesem besonders gefährdeten Bereich der Sonde eine große Kühlfläche mit einem hohen Wärmeaustausch, wobei die zwischen den Radialnuten stehenden, gekühlten Materialstege diese Wirkung unterstützen. Als Folge kann die Kühlflüssigkeitsmenge gegenüber den bekannten Sonden gesenkt werden.

Nach einem weiteren Merkmal der Erfindung sind der Vorlauf-Strömungspfad und der Rücklauf-Strömungspfad durch zwei vom Bereich der Sondenrückseite bis zum Bereich der Sondenfrontseite parallel zueinander geführte Wendeln gebildet, die den Hohlraum des Doppelmantels in zwei flüssigkeitsdicht voneinander getrennte, gleichgroße, spiralförmig umlaufende Kammern, eine Vorlauf- und eine Rücklauf-Strömungskammer, unterteilen. Diese Gestaltung des Strömungspfades ermöglicht es durch Wahl der Steigung der Wendeln auf besonders einfache Weise, an allen Stellen des Strömungsweges der Kühlflüssigkeit gleiche Strömungsquerschnitte zu realisieren.

Die flüssigkeitsdichte Verbindung zwischen den die Seitenwandungen der Strömungskammern bildenden Wendeln und dem Innenrohr und dem Außenrohr des Doppelmantels des Gehäuses ist in Ausgestaltung der Erfindung durch Preßsitz realisiert. Dieser kann durch Aufschrumpfen des Außenrohres auf die um das Innenrohr gelegten Wendeln erreicht werden. Dadurch können aufwendige Abdichtungsvorkehrungen entfallen.

Die Erfindung wird nachstehend anhand eines Ausführungsbeispiels näher erläutert. In der dazugehörigen Zeichnung zeigt:
- Figur 1: einen Längsschnitt durch ein erfindungsgemäßes Gehäuse,
- Figur 2: einen Querschnitt gemäß Figur 1.

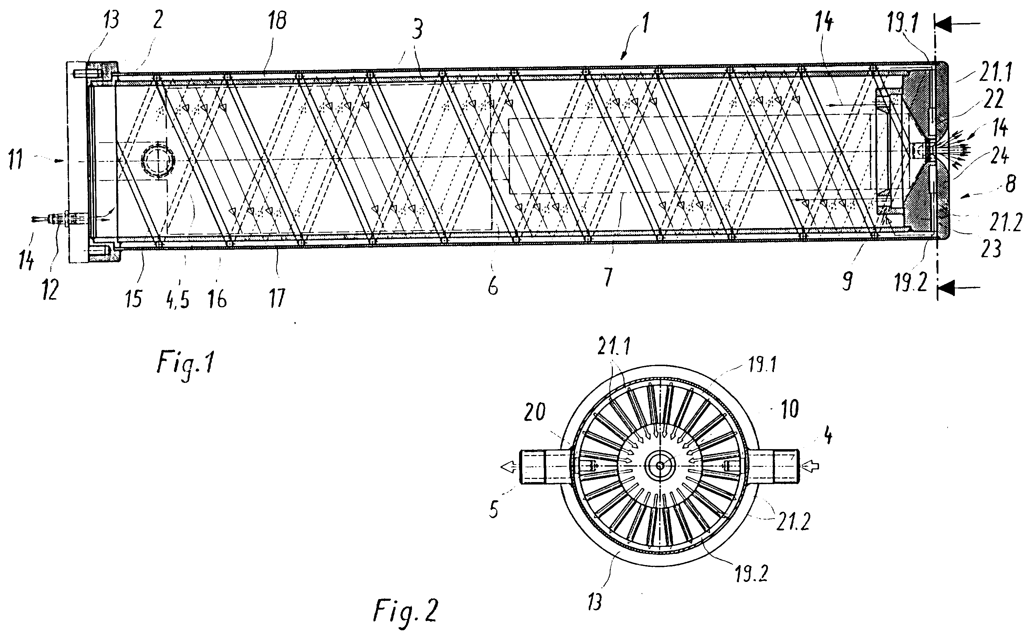

Wie aus Figur 1 zu ersehen ist, besitzt das Gehäuse 1 über seiner gesamten Länge einen Doppelmantel 3, zwischen dem ein Hohlraum 2 gebildet ist. In das Innenrohr des Gehäuses 1 ist eine Videokamera 6 zusammen mit einem passenden Feuerraumobjektiv 7 und zusätzlichen Komponenten, wie z. B. einem Netzteil, eingeschoben. Diese Kamerakomponenten sind in Figur 1 nur andeutungsweise durch Strich-Punkt-Linien dargestellt. Sie bilden eine Einheit und sind an einem Kameraeinschub 13 befestigt. Das Feuerraumobjektiv 7 liegt in Funktionsstellung, wie dargestellt, an der Sondenfrontseite 8 an. Es wird durch eine geeignete Zentrierung 9 vor der Ausblicksöffnung 10 geführt, die je nach Objektivtyp zwischen 2 und 3 mm im Durchmesser beträgt.

An der Sondenrückseite 11 befindet sich ein Spülluftanschluß 12, durch den Druckluft eingeblasen wird. Die Objektivspitze leitet im Zusammenwirken mit der Sondenfrontseite 8 die Spülluft 14 durch die Ausblicksöffnung 10, was weiter unten noch etwas näher erläutert wird. Hierdurch wird das Eintreten von Fremdkörpern, Gasen und Wärme in das Gehäuse 1 und damit eine Beschädigung der Kamera verhindert.

Im Hohlraum 2 des Doppelmantels 3 sind zwei Wendeln 15 und 16 angeordnet, wie in Figur 1 dargestellt. Erläuternd sei hier zu Figur 1 bemerkt, daß zum besseren Verständnis die vor der Schnittebene liegenden, also eigentlich nicht sichtbaren Abschnitte der Wendeln mit Vollinien dargestellt sind. Beide Wendeln 15 und 16 beginnen um 180° versetzt an der Sondenrückseite 11 und verlaufen parallel zueinander mit gleichbleibender Steigung bis zur Sondenfrontseite 8. Sie bilden auf diese Weise zwei flüssigkeitsdicht voneinander getrennte, spiralförmig umlaufende Kammern, eine Vorlaufkammer 17 und eine Rücklaufkammer 18, an deren Beginn (Vorlaufkammer 17) und Ende (Rücklaufkammer 18) ein Einlaß 4 bzw. ein Auslaß 5 für die Kühlflüssigkeit eingebunden ist. Die flüssigkeitsdichte Verbindung zwischen den Wendeln 15 und 16 und dem Doppelmantel 3 wird dadurch erreicht, daß das Außenrohr des Doppelmantels 3 auf die auf das Innenrohr herumgelegten Wendeln aufgeschrumpft wird.

Die Wendeln 15 und 16 enden an der Sondenfrontseite 8 ebenfalls um 180° versetzt, und zwar derart, daß die Vorlaufkammer 17 dort in eine Hälfte 19.1 eines Außenringkanals 19 übergeht, die von der zweiten Hälfte 19.2 dieses Kanals flüssigkeitsdicht getrennt ist, was beispielsweise, wie dargestellt, durch entsprechende Trennstücke 20 erreicht werden kann, die an den Endstellen der Wendeln 15 und 16 im Außenringkanal 19 dichtend befestigt sind.

Von der Hälfte 19.1 des Außenringkanals 19 führen Radialnuten 21.1 in einen Innenringkanal 22, der die Ausblicksöffnung 10 konzentrisch umgibt. Eine gleich große Anzahl von Radialnuten 21.2 mit gleichen Querschnitten führt aus diesem Innenringkanal 22 hinaus in die zweite Hälfte 19.2 des Außenringkanals 19, von der die Rücklaufkammer 18 abgeht.

Der Außenringkanal 19, die Radialnuten 21 sowie der Innenringkanal 22 werden zwischen einer Konturenscheibe 23 und einer Frontscheibe 24 bei deren Montage gebildet. Die Konturenscheibe 23 ist mit dem Innenrohr des Doppelmantels 3 bündig verschweißt und ihre Innenfläche ist der Form der Objektivspitze angepaßt. Zwischen Objektivspitze und Konturenscheibe 23 verbleibt ein kleiner Ringspalt, durch den die Spülluft 14 zur Ausblicksöffnung 10 geführt wird.

In der Außenfläche der Konturenscheibe 23 sind die Radialnuten 21 und der Innenringkanal 22 ausgeformt, was am besten aus der freigeschnittenen Darstellung in Figur 2 zu erkennen ist. Die Frontscheibe 24 liegt im montierten Zustand, verschweißt mit dem Außenrohr des Doppelmantels 3, dichtend an der Konturenscheibe 23 an. Sie bildet mit ihrer planen Innenfläche den vorderen Abschluß der Radialnuten 21, des Außenringkanals 19 und des Innenringkanals 22 und weist eine zentrale Öffnung auf, die die Ausblicksöffnung 10 freigibt.

In den Figuren der Zeichnung ist zur Verdeutlichung der Erfindung der Durchlauf der Kühlflüssigkeit durch das Gehäuse 1 dargestellt. Die Kühlflüssigkeit tritt am Einlaß 4 in die Vorlaufkammer 17 ein und fließt, deren Windung folgend, spiralförmig zur Sondenfrontseite 8. Dies ist durch die in die Vorlaufkammer 17 eingezeichneten Pfeillinien dargestellt, wobei die ausgezogenen Pfeillinien die Strömungsrichtung vor der Schnittebene und die gestrichelten Pfeillinien die Strömungsrichtung hinter der Schnittebene andeuten sollen. An der Sondenfrontseite 8 geht die Vorlaufkammer 17 in die Hälfte 19.1 des Außenringkanals 19 über, in der die Kühlflüssigkeit auf die Radialnuten 21.1 aufgeteilt wird und durch diese hindurch in den Innenringkanal 22 strömt. Die Kühlflüssigkeit wird damit auf eine große Fläche verteilt, wcdurch aufgrund der hohen Wärmeaustauschrate eine effektive Kühlung der durch Hitzeeinwirkung und Umgebungsmedien am stärksten gefährdeten Sondenfrontseite 8 erreicht wird.

Aus dem Innenringkanal 22 strömt die Kühlflüssigkeit über die Radialnuten 21.2 in die zweite Hälfte 19.2 des Außenringkanals 19 und von dort über die Rücklaufkammer 18 zum Auslaß 5. Aufgrund der Wärmeausdehnung der Kühlflüssigkeit ist die Strömungsgeschwindigkeit in der Rücklaufkammer 18 etwas größer als in der Vorlaufkammer 17. Die Rückführung der Kühlflüssigkeit in der Rücklaufkammer 18, die im Gegenstrom zu der Strömung in der Vorlaufkammer 17 erfolgt, ist in Figur 1 aus Gründen der übersichtlichkeit nicht dargestellt.

## Patentansprüche

1. Gehäuse einer Feuerraumsonde, das einen Doppelmantel aufweist, dessen Hohlraum über einem im Bereich der Sondenrückseite angeordneten Einlaß mit einer Kühlflüssigkeit beschickt wird, die in einem Vorlauf-Strömungspfad zur Sondenfrontseite strömt, dort im Bereich einer Ausblicksöffnung umgelenkt und in einem Rücklauf-Strömungspfad zu einem im Bereich der Sondenrückseite angeordneten Auslaß zurückgeführt wird, dadurch gekennzeichnet, daß der Vorlauf-Strömungspfad an der Sondenfrontseite (8) in eine Hälfte (19.1) eines sich über den Umfang der Sonde erstreckenden Außenringkanals übergeht, von dem eine Anzahl, in der Sondenfrontseite (8) verlaufende Radialnuten (21.1) in eine Hälfte eines Innenringkanals (22) führt, der die Ausblicksöffnung (10) konzentrisch umgibt, und von dessen zweiten Hälfte, die mit der ersten Hälfte flüssigkeitsseitig eine Einheit bildet, eine Anzahl Radialnuten (21.2) nach außen in die zweite, von der ersten Hälfte (19.1) flüssigkeitsdicht getrennten Hälfte (19.2) des Außenringkanals führt, von der der Rücklauf-Strömungspfad abgeht, wobei auf dem gesamten Strömungsweg der Kühlflüssigkeit, beginnend mit dem Einlaß (4) und endend mit dem Auslaß (5) ein gleichbleibender Strömungsquerschnitt vorliegt.

2. Gehäuse einer Feuerraumsonde nach Anspruch 1, dadurch gekennzeichnet, daß der Vorlauf-Strömungspfad und der Rücklauf-Strömungspfad durch zwei vom Bereich der Sondenrückseite (11) bis zum Bereich der Sondenfrontseite (8) parallel zueinander geführte Wendeln (15,16) gebildet sind, die den Hohlraum (2) des Doppelmantels (3) in zwei flüssigkeitsdicht voneinander getrennte, gleichgroße, spiralförmig umlaufende Kammern, eine Vorlauf- (17) und eine Rücklauf-Strömungskammer (18), unterteilen.

3. Gehäuse einer Feuerraumsonde nach Anspruch 2, dadurch gekennzeichnet, daß die flüssigkeitsdichte Verbindung zwischen den Wendeln (15,16) und dem Doppelmantel (3) durch Preßsitz realisiert ist.

## Claims

1. Housing for a furnace probe, which housing has a double jacket, the cavity of which is fed, via an inlet arranged in the region of the rear of the probe, with a cooling liquid which, in a forward flow path, flows to the front of the probe, where it is diverted in the region of a viewing aperture, and, in a return flow path, is fed back to an outlet arranged in the region of the rear of the probe, characterized in that the forward flow path at the front (8) of the probe merges into a half (19.1) of an outer annular conduit extending over the circumference of the probe, from which a number of radial grooves (21.1) running in the front (8) of the probe lead into a half of an inner annular conduit (22), which concentrically surrounds the viewing aperture (10) and from the second half of which, on the liquid side, forms a unit with the first half, a number of radial grooves (21.2) leading outwards into the second half (19.2), which is separated from the first half (19.1) in a liquid-tight manner, of the outer annular conduit, from which half (19.2) the return flow path starts, a uniform flow cross-section being present over the entire flow course of the cooling liquid, starting with the inlet (4) and ending with the outlet (5).

2. Housing for a furnace probe according to claim 1, characterized in that the forward flow path and the return flow path are formed by two helices (15,16) which are guided parallel to one another from the region of the rear (11) of the probe as far as the region of the front (8) of the probe, which helices divide the cavity (2) of the double jacket (3) into two chambers, a forward flow chamber (17) and a return flow chamber (18), which are separated from one another in a liquid-tight manner, are of equal size, and run in the form of a spiral.

3. Housing for a furnace probe according to claim 2, characterized in that the liquid-tight connection between the helices (15,16) and the double jacket (3) is achieved by a press fit.

## Revendications

1. Logement pour sonde à foyer qui comporte une enveloppe double dont l'espace creux est alimenté en liquide de refroidissement par une entrée dans la zone de l'arrière de la sonde, liquide qui s'écoule dans une voie d'écoulement aller vers l'avant de la sonde, là change de direction dans la zone d'une ouverture de visée et est ramené dans une voie d'écoulement retour vers une sortie dans la zone de l'arrière de la sonde, caractérisé en ce que la voie d'écoulement aller se transforme à l'avant de la sonde (8) en une moitié (19.1) d'un canal annulaire externe s'étendant à la périphérie de la sonde, d'où une pluralité de rainures radiales (21.1) s'étendant dans la face avant de la sonde (8) conduit à une moitié d'un canal annulaire interne (22) qui entoure concentriquement l'ouverture de visée (10), et de sa seconde moitié qui forme du côté liquide une unité avec la première moitié, une pluralité de rainures radiales (21.2) partent vers l'extérieur dans la seconde moitié (19.2) d'un canal annulaire externe séparée de la première moitié (19.1), de façon étanche au liquide, d'où part la voie d'écoulement de retour, de manière que, sur la voie d'écoulement totale du liquide de refroidissement partant de l'entrée (4) et se terminant avec la sortie (5), on ait une section transversale d'écoulement constante.

2. Logement pour sonde d'un foyer suivant la revendication 1, caractérisé en ce que la voie d'écoulement aller et la voie d'écoulement retour sont formées par deux hélices parallèles (15, 16), tournant en spirale, de même dimension et séparées l'une de l'autre de façon étanche au liquide, allant de la zone de l'arrière (11) de la sonde à la zone de l'avant (8) de la sonde, qui subdivisent l'espace creux (2) de l'enveloppe double (3) en deux chambres, une chambre d'écoulement aller (17) et une chambre d'écoulement retour (18).

3. Logement pour sonde d'un foyer suivant la revendication 2, caractérisé en ce que la liaison étanche au liquide entre les hélices (15, 16) et l'enveloppe double (3) est réalisée par ajustage serré.
